# NEW EUROPEAN PATENT SPECIFICATION

(11) **EP 0 059 513 B2**
(45) Date of publication and mention of the opposition decision: **29.12.1993**
(45) Mention of the grant of the patent: 25.04.1990
(21) Application number: 82200228.3
(22) Date of filing: 25.01.1980
(51) Int. Cl.: B23B 31/02

(54) **Mounting device for cutting tools**
Vorrichtung zum Befestigen von Schneidwerkzeugen
Dispositif de montage pour des outils de coupe

(30) Priority: 07.02.1979 SE 7901061
(43) Date of publication of application: 08.09.1982
(62) Divisional of application: 80850012.8
(73) Proprietor: SANDVIK AKTIEBOLAG, 811 81 Sandviken (SE)
(72) Inventor: Anderson, Ken Göte Eskil, S-810 22 Arsunda (SE)
(74) Representative: Eriksson, Kjell

(56) References cited:
- DE-A- 2 056 683
- DE-A- 2 541 123
- DE-C- 658 792
- DE-C- 897 352
- DE-C- 1 552 556
- DE-U- 7 827 203
- FR-A- 1 356 461
- US-A- 3 240 503

## Description

The present invention relates to a mounting device for the connection of a rotary cutting tool to a machine spindle comprising a conical arbor for connection to the spindle, an adapter for connecting the cutting tool to the arbor and having a cylindrical extension extending from its main portion, the adapter being directly clampable in use to the arbor by means of a clamping bolt such that a radial flange at the junction between main portion and cylindrical extension is clamped in axial abutment to a front face of the arbor, thus constituting an assembly attachable in operation as a single unit to a machine spindle, the adapter having an internal thread portion located within said cylindrical extension for engagement in use with an exterior threaded portion of the bolt at its tool-oriented end portion. The invention also relates to an adapter designed to be used in the mounting device.

A mounting device of the above type is previously known from DE-A 25 41 123. Said device offers extensive interchangeability of cutting tools between machining centers regardless of spindle specifications. By matching the arbor to the individual machine spindle, any adapter for a specific operation can be used in any machine, thereby effectively reducing or eliminating the need to purchase and stock duplicate tools for each machine.

DE-U-78 27 203, whilst describing a cylindrical extension having two surface portions of slightly different diameter, carries an external thread for direct engagement with a corresponding thread on the arbor.

The object of the invention is to provide a connection between the arbor and the adapter which is as strong as possible.

Another object of the invention is to ensure positive drive of the adapter as well as correct orientation of the cutting edge.

These and other objects of the invention are attained by giving the invention the characterizing features stated in the appending claims 1 and 3 respectively.

The invention is described in detail in the following with reference to the accompanying drawings in which one embodiment is shown by way of example. It is to be understood that this embodiment is only illustrative of the invention and that various modifications thereof may be made within the scope of the claims.

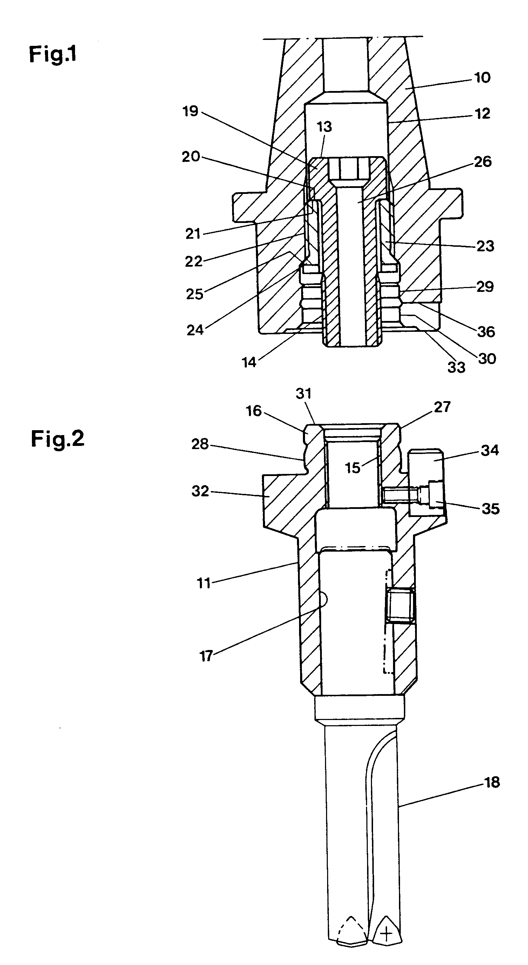

In the drawings, Fig. 1 is an axial sectional view of the arbor member of the mounting device, and Fig. 2 is an axial section view of the adapter showing also a rotary cutting tool entered thereinto.

Referring now to Figs. 1-2 of the drawing, there is shown an arbor 10 and a tool adapter 11 as described in our parent patent EP-B-015 248. The arbor 10 has a bore 12 extending centrally therethrough, the upper portion of which is connectable with the machine spindle by means of a threaded bolt (not shown). The lower portion of the bore 12 is enlarged and receives a clamping bolt 13 which at its lower end portion has an external thread 14 adapted to engage a corresponding internal thread 15 of an axially extending cylindrical centering portion 16 of the adapter 11, which is to be received in a corresponding portion of the bore 12 upon clamping. The internally threaded portion 15 of the adapter 11 provides the upper portion of a central bore extending through the adapter, the lower portion 17 of said bore being adapted to receive a rotary cutting tool 18 which is a drill.

The clamping bolt 13 is axially fixed in the bore 12 by the provision of an annular abutment surface 20 on the underneath side of the head 19 of the bolt oriented perpendicular to the axis of said bolt and intended for abutment against the upper end surface 21 of a sleeve member 23, that is threadably engaged at 22 into the above related enlarged portion of the bore 12. The lower end portion of said sleeve member 23 is a flange portion 24 adapted to engage with a correspondingly shaped shoulder abutment 25.

The axially extending centering portion 16 of the adapter 11 is provided with two cylindrical portions 27 and 28 of differing diameters intended to be used as peripheral guiding surfaces. The upper surface 27 in Fig. 2 has a slightly less diameter than the axially rear surface 28, both said surfaces being intended upon mounting to slide with a close interfit against corresponding guide surfaces 29 and 30 respectively provided at the lower portion of the bore 12. The upper or distal surface 27 serves as a guide for inserting the adapter 11 in the bore 12 in the arbor. The clamping bolt 13 serves to clamp the adapter 11 directly to the arbor 10 so as to form a unit separable from the spindle. The end surface 31 of the axial centering portion 16 is radially extending. The adapter 11 is furthermore provided with a radial flange 32 located behind said centering portion 16 which is adapted to abut against the lower end surface of the arbor 10 in order to reach an axially fixed position.

The dimensioning and formation of the centering portion 16 is such that the internal threaded portion 15 thereof and correspondingly threaded portion 14 of the clamping bolt 13 extend in length substantially in excess of the total length of guiding surfaces 27, 28. This improves the moment stability when mouning the adapter 11 into the arbor 10, at the same time as the centrally located clamping bolt 13 gives a high claimping force in the mounting which stabilizes the conditions. The function of the centering portion 16 is to achieve a tool mounting without play caused by clearances, minimize radial off-setting of the cutting tool, and to provide a strong connection between the arbor and the adapter. The maintenance of these conditions requires that the resulting interfit is made rather accurate which hitherto has caused jamming conditions for the cutting tools upon the mounting thereof. Due to the provision of a centering portion composed of sections of slightly various diameters it has been found that any jamming can be almost entirely avoided.

According to the invention the adapter 11 may be secured against rotation relative to the arbor by means of a wedge 34 receivable in the radial flange portion 32, said wedge being connected to the adapter by means of a radial bolt 35 and adapted to be received in a complementary wedging slot 36 within the arbor 10. The wedge 34 may be arranged radially outwardly of the rear surface portion 28 on only one side of the adapter and extends toward the arbor from a surface abutting a surface on the arbor.

The advantage of providing a wedge 34 that is mounted on the tool that is being rotated i.e. the adapter 11, instead of mounted on the member that causes rotation, i.e. the arbor, is the fact that the wedge supporting member is the member that can be easiest damaged if the tooling structure collapses. Usually the adapter is provided with wedge means also at its tool oriented end portion which also are susceptible to damages. If the wedge 34 is provided in the adapter 11 those members easiest susceptible to damages will be located on the same member. This substantially lessens the risk of tool failure and enables reduction of costs. The adapter 11 is furthermore provided with only one wedge 34 which enables mounting of the arbor to be effected in only one manner which is an advantage since working with single cutting tools in tooling centre is absolutely necessary for exact knowledge of the position of the cutting edge in relation to the keying members of the machine spindle.

## Claims

1. A mounting device for the connection of a rotary cutting tool (18) to a machine spindle, comprising a conical arbor (10) for connection to the spindle, an adapter (11) for connecting the cutting tool (18) to the arbor (10) and having a cylindrical extension (16) extending from its main portion, the adapter (11) being directly clampable in use to the arbor (10) by means of a clamping bolt (13) such that a radial flange at the junction between main portion and cylindrical extension (16) is clamped in axial abutment to a front face of the arbor, thus constituting an assembly attachable in operation as a single unit to a machine spindle, the adapter (11) having an internal thread portion (15) located within said cylindrical extension (16) for engagement in use with an exterior threaded portion (14) of the bolt (13) at its tool-oriented end portion, **characterized** in that the cylindrical extension (16) has two cylindrical surface portions (27,28) of slightly different diameters, the distal surface portion (27) having a slightly smaller diameter than the other surface portion (28), the bore (12) of the arbor (10) having two guide surfaces (29,30) which upon mounting slide with close interfit against the two cylindrical surface portions (27,28), said distal surface portion serving as a guide for detachably inserting the adapter in the bore (12) in the arbor, and that the internal thread portion (15) in the cylindrical extension of the adapter extends through both cylindrical surface portions (27,28).

2. Mounting device according to claim 1, comprising a wedge (34) on the adapter (11) for preventing relative rotation between the arbor (10) and said adapter, said wedge being arranged radially outwardly of said other surface portion (28) on only one side of said adapter and extending toward said arbor from a surface abutting a surface on said arbor, whereby the wedge is positively receivable in a corresponding recess (36) in the front face of the arbor (10).

3. Adapter for use in a mounting device according to claims 1 and 2 in connecting a cutting tool (18) to an arbor (10) receivable in a machine spindle, the adapter (11) being connectable to the cutting tool (18) and having a cylindrical extension (16) extending from its main portion in a direction opposed to the cutting tool, an internal thread portion (15) being located within said cylindrical extension (16),
**characterized** in that the cylindrical extension (16) has two cylindrical surface portions (27,28) of slightly different diameters, the distal surface portion (27) having a slightly smaller diameter than the other surface portion (28), the bore (12) of the arbor (10) having two guide surfaces (29,30) which upon mounting slide with close interfit against the two cylindrical surface portions (27,28), said distal surface portion serving as a guide for detachably inserting the adapter in the bore (12) in the arbor, the internal thread portion (15) in the cylindrical extension of the adapter extends through both cylindrical surface portions (27,28) and the adapter is further provided with a wedge (34) for preventing relative rotation between an arbor and the adapter, said wedge being arranged radially outwardly of said other surface portion (28) on only one side of the adapter and extending away from a surface of the adapter abutting in use a surface on the arbor.

4. Adapter according to claim 3,
wherein the internal thread portion (15) of the adapter has an axial length in excess of the total length of the cylindrical extension of the adapter.

## Patentansprüche

1. Befestigungsvorrichtung für die Verbindung eines Schneidwerkzeuges (18) mit einer konischen Maschinenspindel, mit einer Welle (10) für die Verbindung mit der Spindel, einem Übergangsstück (11) für die Verbindung des Schneidwerkzeuges (18) mit der Welle (10), wobei das Übergangsstück eine zylindrische Verlängerung (16) aufweist, welche sich von seinem Hauptteil aus erstreckt, das Übergangsstück (11) im Gebrauch mit Hilfe eines Klemmbolzens (13) direkt an die Welle (10) klemmbar ist, derart, daß ein radialer Flansch am Übergang zwischen dem Hauptabschnitt und der zylindrischen Verlängerung (16) in axialer Anlage an die Stirnfläche der Welle geklemmt wird, so daß ein Aufbau gebildet wird, welcher im Betrieb als eine Einheit an einer Maschinenspindel anbringbar ist, und wobei das Übergangsstück (11) einen inneren Gewindeabschnitt (15) hat, welcher innerhalb der zylindrischen Verlängerung (16) liegt, um bei Gebrauch in einen äußeren Gewindeabsschnitt (14) des Bolzens (13) an seinem zum Werkzeug hin gerichteten Endabschnitt einzugreifen,
**dadurch gekennzeichnet**, daß die zylindrische Verlängerung (16) zwei zylindrische Oberflächenabschnitte (27, 28) mit etwas unterschiedlichen Durchmessern hat, wobei der körperfern gelegene Oberflächenabschnitt (27) einen etwas geringeren Durchmesser als der andere Oberflächenabschnitt (28) hat, daß die Bohrung (12) der Welle (10) zwei Führungsflächen (29, 30) hat, welche bei der Befestigung mit enger Passung über die beiden zylindrischen Oberflächenabschnitte (27, 28) gleiten, wobei der körperfern gelegene Oberflächenabschnitt als Führung für das lösbare Einsetzen des Übergangsstückes in die Bohrung (12) der Welle dient, und daß der Innengewindeabschnitt (15) in der zylindrischen Verlängerung des Übergangsstückes sich über beide zylindrische Flächenbereiche (27, 28) erstreckt.

2. Befestlgungsvorrichtung nach Anspruch 1, welche einen Keil (34) an dem Übergangsstück (11) zum Verhindern einer relativen Drehbewegung zwischen der Welle (10) und em Adapter aufweist, wobei der Keil radial außerhalb des anderen Oberflächenabschnittes (28) auf nur einer Seite des Übergangsstückes angeordnet ist und sich in Richtung der Welle von einer Fläche aus erstreckt, welche an einer Fläche der Welle anliegt, wodurch der Keil fest in einer entsprechenden Aussparung (36) in der Stirnfläche der Welle (10) aufnehmbar ist.

3. Übergangsstück für die Verwendung bei einer Befestigungsvorrichtung nach den Ansprüchen 1 und 2 beim Verbinden eines Schneidwerkzeuges (18) mit einer Welle (10), welche in einer Maschinenspindel aufnehmbar ist, wobei das Übergangsstück (11) mit dem Schneidewerkzeug (18) verbindbar ist und eine zylindrische Verlängerung (16) aufweist, welche sich von seinem Hauptteil aus in der dem Schneidewerkzeug entgegengesetzten Richtung erstreckt, und wobei ein Gewindeabschnitt (15) in der zylindrischen Verlängerung (16) liegt, dadurch gekennzeichnet, daß die zyllndrische Verlängerung (16) zwei zylindrische Oberflächenabschnitte (27, 28) mit etwas unterschiedlichen Durchmessern hat, wobei der körperferne Oberflächenabschnitt (27) einen etwas geringeren Durchmesser als der andere Oberflächenabschnitt (28) hat, daß die Bohrung (12) der Welle (10) zwei Führungsflächen (29, 30) hat, welche beim Befestigen mit enger Passung über die beiden zylindrischen Oberflächenabschnitte (27, 28) gleiten, wobei der körperfern gelegene Oberflächenabschnitt als Führung für das lösbare Einsetzen des Übergangsstückes in die Bohrung (12) der Welle dient, daß der innere Gewindeabschnitt (15) in der zylindrischen Verlängerung des Übergansstückes sich durch beide zylindrischen Oberflächenabschnitte (27, 28) hindurch erstreckt und daß das Übergangsstück weiterhin mit einem Keil (34) versehen ist, um eine Relativdrehung zwischen der Welle und dem Übergangsstück zu verhindern, wobei der Keil in radialer Richtung außerhalb des anderen Oberflächenabschnittes (28) auf nur einer Seite des Übergangsstückes angeordnet ist und sich von einer Oberfläche des Übergangsstückes weg erstreckt, welche bei Gebrauch an einer Oberfläche der Welle anliegt.

4. Übergangsstück nach Anspruch 3, wobei der innere Gewindeabschnitt (15) des Übergangsstückes eine axiale Länge hat, welche die Gesamtlänge der zylindrischen Verlängerung des Übergangsstückes übersteigt.

## Revendications

1. Dispositif de montage destiné à fixer un outil de coupe (18) à une broche de machine, comprenant un mandrin (10) cônique qui se monte sur la broche, un adaptateur (11) destiné à fixer l'outil de coupe (18) au mandrin (10), et possédant un prolongement cylindrique (16) qui fait saillie sur sa portion principale, l'adaptateur (11) pouvant être directement bloqué sur le mandrin (10) en utilisation à l'aide d'une vis de blocage (13) de telle manière qu'une collerette radiale prévue à la jonction entre la portion principale et le prolongement cylindrique (16) soit serrée en butée axiale contre une face frontale du mandrin, en constituant de cette façon un ensemble qui, en utilisation, peut être fixé comme un seul bloc à la broche d'une machine, l'adaptateur (11) présentant une portion filetée intérieure (15) contenue dans ledit prolongement cylindrique (16) pour coopérer en utilisation avec une portion filetée extérieure (14) de la vis (13), à la portion terminale de cette vis qui est dirigée vers l'outil,
caractérisé en ce que le prolongement cylindrique (16) possède deux portions de surfaces cylindriques (27, 28) présentant des diamètres légèrement différents, la portion de surface distale (27) ayant un diamètre légèrement inférieur à celui de l'autre portion de surface (28), l'alésage (12) du mandrin (10) présentant deux surfaces de guidage (29, 30) qui, au moment du montage, glissent avec un ajustement étroit contre les deux portions de surfaces cylindriques (27, 28), ladite portion de surface distale servant de guide pour insérer l'adaptateur de façon démontable dans l'alésage (12) du mandrin, et en ce que la portion filetée intérieure (15) contenue dans le prolongement cylindrique de l'adaptateur, s'étend à travers les deux portions de surface cylindriques (27, 28).

2. Dispositif de montage selon la revendication 1, comprenant une clavette (34) prévue sur l'adaptateur (11) pour s'opposer à la rotation relative entre le mandrin (10) et ledit adaptateur, ladite clavette étant agencée radialement à l'extérieur de ladite autre portion de surface (28) sur un seul côté dudit adaptateur et faisant saillie vers ledlt mandrin sur une surface qui s'appuie contre une surface dudit mandrin, ladite clavette se logeant positivement dans une encoche correspondante (36) de la face avant du mandrin (10).

3. Adaptateur destiné à être utilisé dans un dispositif de montage selon les revendications 1 et 2 pour fixer un outil de coupe (18) à un mandrin (10) qui se monte dans une broche de machine, l'adaptateur (11) pouvant être assemblé à l'outil de coupe (18) et possédant un prolongement cylindrique (16) qui fait saillie sur sa portion principale dans le sens qui tourne le dos à l'outil de coupe, une portion filetée intérieure (15) étant contenue dans ledit prolongement cylindrique (16), caractérisé en ce que le prolongement cylindrique (16) possède deux portions de surfaces cylindriques (27, 28) de diamètres légèrement différents, la portion de surface distale (27) ayant un diamètre légèrement inférieur à celui de l'autre portion de surface (28), l'alésage (12) du mandrin (10) présentant deux surfaces de guidage (29, 30) qui, au moment du montage, glissent avec un ajustement étroit contre les deux portions de surfaces cylindriques (27, 28), ladite portion de surface distale servant de guide pour insérer l'adaptateur de façon démontable dans l'alésage (12) de l'arbre, la portion filetée intérieure (15) du prolongement cylindrique de l'adaptateur s'étendant à travers les deux portions de surface cylindriques (27, 28) et l'adaptateur étant en outre muni d'une clavette (34) destinée à s'opposer à la rotation relative entre le mandrin et ledit adaptateur, ladite clavette étant agencée radialement à l'extérieur de ladite autre portion de surface (28) sur un seul côté de l'adaptateur et faisant saillie sur une surface de l'adaptateur qui s'appuie en utilisation contre une surface du mandrin.

4. Adaptateur selon la revendication 3, dans lequel la portion filetée intérieure (15) de l'adaptateur possède une longueur axiale supérieure à la longueur totale du prolongement cylindrique de l'adaptateur.
